# FASCICULE DE BREVET EUROPEEN

(11) **EP 2 233 272 B1**
(45) Date de publication et mention de la délivrance du brevet: **08.05.2019**
(21) Numéro de dépôt: 10290135.2
(22) Date de dépôt: 15.03.2010
(51) Int. Cl.: B29C 45/26, B29C 33/00, B29C 45/00, B29L 31/26

(54) **Dispositif de moulage par injection**
Spritzgussvorrichtung
Injection moulding device

(30) Priorité: 25.03.2009 FR 0901406
(43) Date de publication de la demande: 29.09.2010
(73) Titulaire: Auray Plast, 56400 Auray (FR)
(72) Inventeur: Crouan, Jean-Baptiste, 56000 Vannes (FR)
(74) Mandataire: Novagraaf Technologies

(56) Documents cités:
- FR-A- 1 369 813
- FR-A- 2 374 575
- GB-A- 1 331 448
- US-A- 4 043 727

## Description

### DOMAINE TECHNIQUE DE L'INVENTION

L'invention se rapporte au domaine du moulage d'articles par injection d'une matière plastique.

Dans l'état de la technique, on connaît des dispositifs destinés à équiper des presses pour effectuer le moulage d'articles par injection de matière plastique liquide sous pression.

Ces dispositifs comprennent généralement des éléments de moule déplaçables relativement les uns aux autres et coopérant de manière jointive en délimitant entre eux, d'une part, des plans de joint et, d'autre part, une cavité destinée à être remplie de matière plastique liquide via des canaux d'injection en vue de former ledit article après éjection du moule

Lorsqu'il s'agit de réaliser des articles comportant, sur au moins une face, une partie périphérique en saillie tel qu'un bossage ou une lèvre pourvu d'une arête de liaison avec une autre face adjacente, le plan de joint est tangent à cette autre face.

Dans ce cas, il est nécessaire d'effectuer un usinage ultérieur de l'article au niveau de ladite arête en vue d'éliminer les bavures issues du plan de joint et d'obtenir les cotes imposées par le cahier des charges, par exemple, en réalisant un chanfrein.

Or cette opération est laborieuse car elle est effectuée manuellement et nécessite un outillage spécifique sur un poste de travail qu'il faut sécuriser.

Les dispositifs traditionnels de moulage sont donc souvent à l'origine de nombreux problèmes de qualité et de fiabilité lors de l'utilisation de l'article, en particulier lorsqu'il s'agit d'une pièce technique telle qu'un joint d'étanchéité.

En effet, l'usinage porte alors sur une zone fonctionnelle de la pièce qui présente des risques de défauts graves si elle n'a pas été contrôlée soigneusement.

Le document GB 1 331 448 décrit un joint annulaire comportant un évidement en U dans sa tranche et donne des informations concernant l'arrière-plan technologique.

La présente invention a pour but de résoudre les problèmes techniques posés par l'art antérieur de façon simple et efficace.

Ce but est atteint, selon l'invention, au moyen d'un dispositif de moulage par injection selon les caractéristiques de la revendication 1.

Grâce à l'invention, le plan de joint se trouve déporté hors de la partie fonctionnelle en saillie qui, une fois l'article éjecté du moule, ne porte plus de bavure.

L'usinage ultérieur de cette partie n'est donc plus nécessaire.

Selon l'invention, ledit plan de joint est orienté selon un angle compris entre 10° et 80° par rapport à l'axe de symétrie de la cavité.

Selon l'invention, ledit élément de moule de la partie en saillie présente une dépouille destinée au moulage de la saillie se raccordant vers l'avant au plan de joint par un chanfrein s'étendant jusqu'à ladite arête.

De préférence, ledit élément de moule frontal présente une face plane perpendiculaire à l'axe de symétrie de la cavité.

Selon une variante spécifique, lesdits éléments de moule et ladite cavité présentent une symétrie de révolution autour de l'axe de ladite cavité.

Selon une autre variante, ledit élément de moule de la partie en saillie a une forme globalement tronconique.

Selon l'invention, le dispositif comprend un élément de moule central assurant le moulage de la seconde partie en saillie et ayant un plan de joint avec ledit élément de moule frontal orienté angulairement, à partir de ladite seconde arête et au moins sur une portion de sa longueur, selon la direction d'éjection.

Selon la divulgation, ledit élément de moule de la première partie en saillie est un élément latéral dont le plan de joint aves ledit élément de moule central est incliné vers l'arrière et vers l'axe de symétrie de ladite cavité.

Selon encore une autre caractéristique avantageuse, lesdits canaux d'injection sont ménagés au travers de l'élément de moule frontal.

Un autre objet de l'invention est un procédé de fabrication d'un article, du type comportant au moins une partie périphérique en saillie pourvue d'une arête de liaison avec sa face avant, au moyen du dispositif de moulage selon l'invention.

Encore un autre objet de l'invention est une utilisation du dispositif de l'invention pour fabriquer un article tel qu'un joint annulaire d'étanchéité à simple ou double lèvre en matière élastomère.

Le dispositif et le procédé de l'invention permettent de simplifier les opérations de fabrication par moulage d'un article présentant au moins deux parties fonctionnelles en saillie.

En outre, l'invention permet d'améliorer la productivité et la rentabilité des installations industrielles puisque la cadence de la presse fournissant la puissance ne dépend plus de la fréquence et de la durée des opérations ultérieures d'usinage qui sont devenues inutiles.

Les écarts dimensionnels qui existaient, d'une part, entre les lots d'articles produits et, d'autre part, sur un même article entre les différentes parties en saillie, du fait des opérations complémentaires d'ébavurage et de finition disparaissent puisque ces opérations sont supprimées et que les articles sont déjà aux cotes en sortie de moule.

Les risques de dégradation de la qualité des articles et en particulier de la zone de l'arête qui étaient dus à l'usure des outils d'usinage et notamment de coupe, sont notablement réduits.

Enfin, l'invention permet d'éviter les copeaux résultant des opérations d'ébavurage qui étaient sources de pollution sur le site industriel et de réaliser des économies d'énergie en supprimant le besoin de postes d'usinage.

### BREVE DESCRIPTION DES FIGURES

D'autres caractéristiques, détails et avantages de l'invention ressortiront à la lecture de la description qui suit, en référence aux figures annexées, sur lesquelles :
- la figure 1A représente une demi-vue en coupe d'un dispositif de l'art antérieur et les figures 1B et 1C sont des vues de profil d'un article moulé avec le dispositif de la figure 1A, respectivement avant et après usinage ;
- Les figures 2A et 2B sont des demi-vues en coupe d'un mode de réalisation du dispositif de l'invention (de détail pour la figure 2B) et la figure 2C est une vue de profil d'un article moulé obtenu avec le dispositif de la figure 2A ;
- Les figures 3A à 3F représentent des vues en coupe intégrale du dispositif de la figure 2A lors des étapes successives du procédé de moulage selon l'invention.

Pour plus de clarté, les éléments identiques ou similaires sont repérés par des signes de référence identiques sur l'ensemble des figures.

### DESCRIPTION DETAILLEE D'UN MODE DE REALISATION

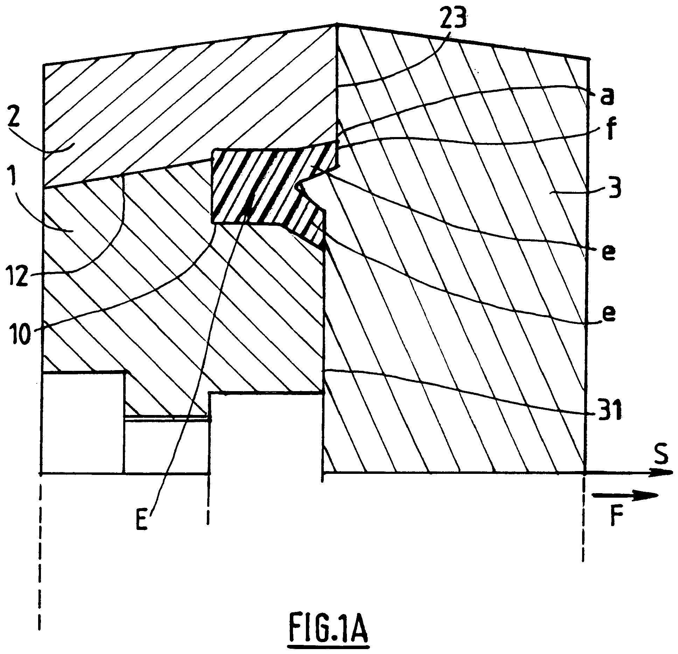

Le dispositif représenté sur la figure 1A est destiné à équiper une presse à injection (non représentée) pour réaliser des opérations industrielles de moulage d'articles présentant, sur au moins une face, une partie en saillie.

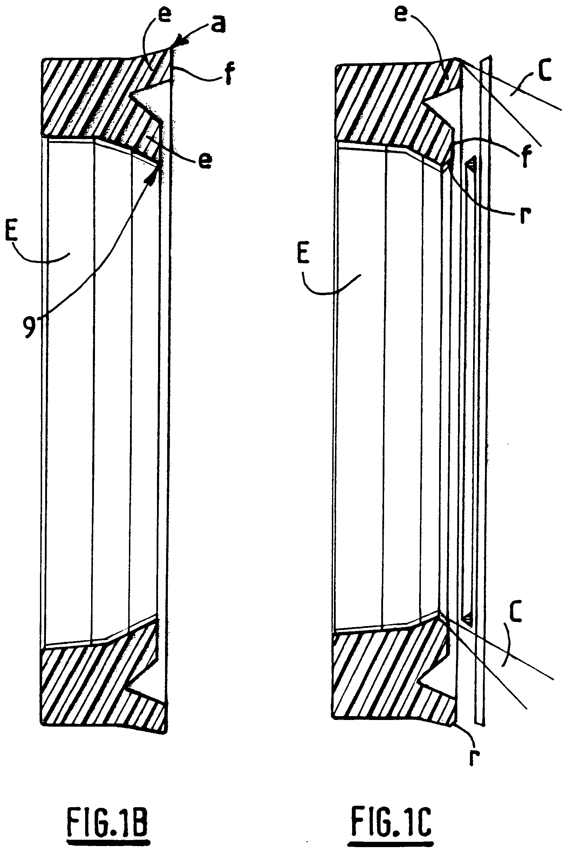

De tels articles sont par exemple des joints d'étanchéité hydraulique E sous forme annulaire avec une simple ou double lèvre périphérique e, comme représentés sur les figures 1B et 1C.

Chacune des lèvres e forme ici une saillie pourvue d'une arête supérieure a située à la liaison avec la face avant f de la lèvre.

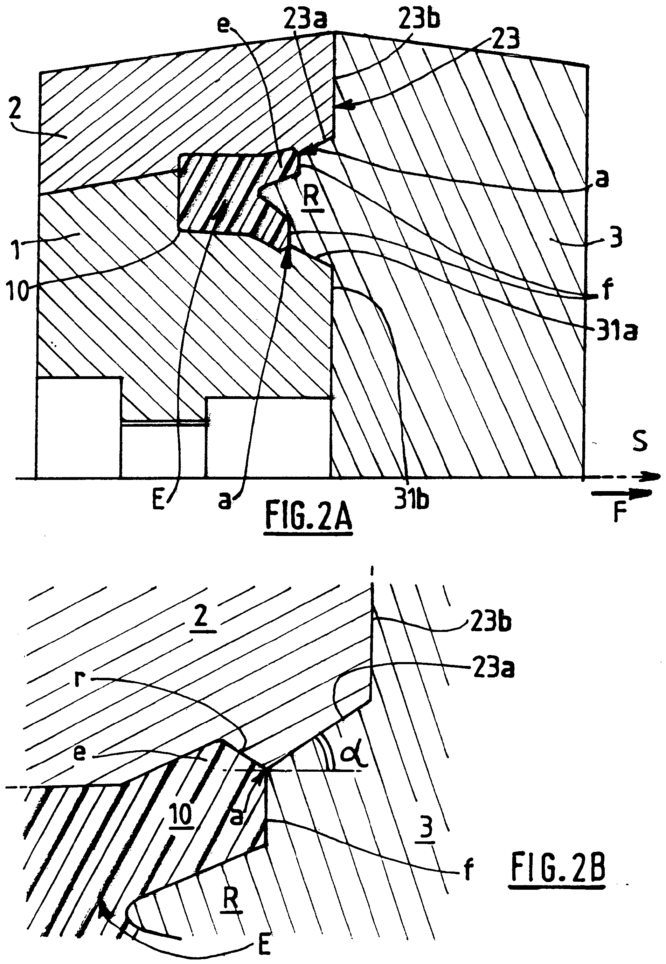

Ce dispositif comprend des éléments de moule 1, 2, 3, respectivement central, latéral et frontal, déplaçables relativement les uns aux autres et coopérant de manière jointive en délimitant entre eux des plans de joint 12, 23, 31 ainsi qu'une cavité 10 destinée à être remplie de matière plastique liquide via des canaux d'injection (non représentés sur les figures 1A et 2A) en vue de former ledit article après éjection du moule.

La cavité 10 forme le moule proprement dit et possède donc une forme d'empreinte complémentaire de celle de l'article à réaliser.

Cette forme est ici annulaire avec un axe de symétrie S.

L'éjection est obtenue par déplacements successifs de l'élément frontal 3 puis de l'élément central 1 en translation dans le sens de la flèche F.

Sur la figure 1A, le plan de joint 23 entre l'élément de moule latéral 2 et l'élément de moule frontal 3 est tangent à la face avant f de la lèvre e en saillie du joint E.

La figure 1B représente le joint annulaire E en sortie de moule, après éjection du dispositif de la figure 1A.

Sur la figure 1C, on pratique un usinage de la lèvre e avec un outil de coupe C en vue de réaliser un chanfrein r au niveau de l'arête a.

Cette opération a pour but d'éliminer les irrégularités (non visibles sur la figure 1B) qui sont produites du fait de l'orientation du plan de joint 23 telle qu'elle est représentée sur la figure 1A.

En effet, après éjection du moule et refroidissement de l'article, les contours de la lèvre, ou plus généralement ceux de la partie en saillie, présentent des défauts de surface sous forme de bavures de matière plastique.

Ce phénomène vient du fait, qu'au cours de l'opération de moulage, il existe toujours un très faible débit de fuite de matière plastique liquide sous pression dans l'espace délimité, au niveau du plan de joint, entre les surfaces métalliques en regard des éléments de moule.

Le dispositif de l'invention ne supprime pas ce phénomène qui est inhérent aux opérations de moulage par injection mais permet de déplacer la position des bavures sur une zone non fonctionnelle de l'article.

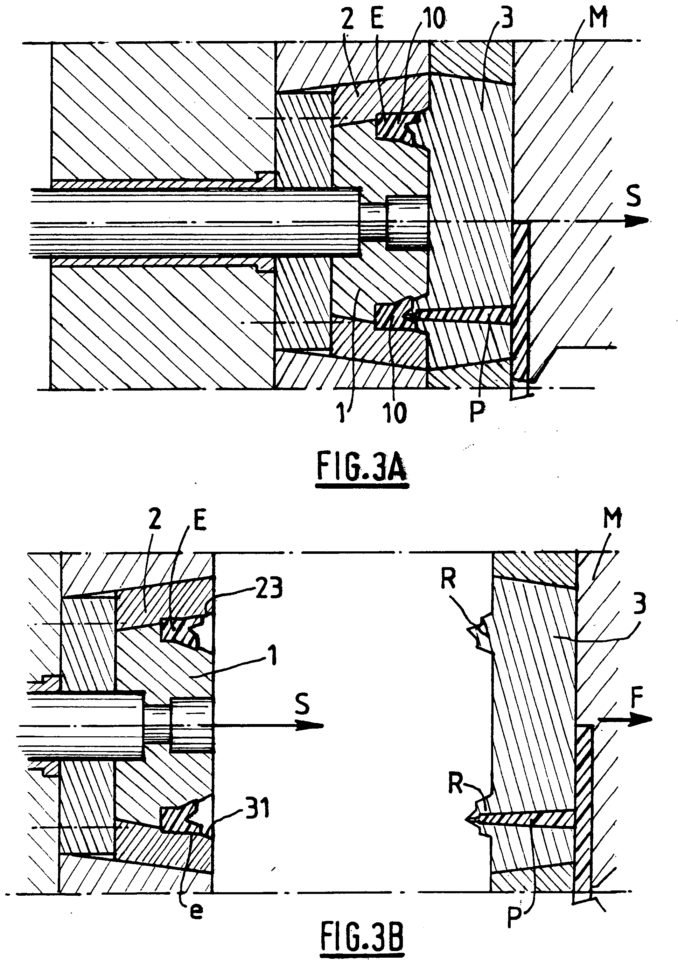

Le mode de réalisation du dispositif de l'invention représenté sur la figure 2A et en détail sur la figure 2B, comporte un élément de moule latéral central 1, un élément de moule latéral 2 et un élément de moule frontal 3.
Les éléments de moule 1, 2, 3 et la cavité 10 présentent une symétrie de révolution autour de l'axe S de symétrie de ladite cavité, comme cela est apparent sur la figure 3A.

L'élément de moule latéral 2 est destiné à former, en coopération avec l'élément de moule frontal 3, la partie en saillie e de l'article moulé.

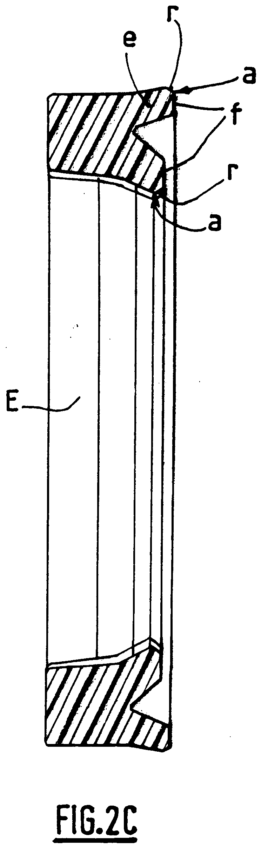

Le plan de joint 23 entre les éléments de moule latéral 2 et frontal 3 est orienté angulairement, à partir de l'arête a, selon la direction d'éjection F comme représenté sur la figure 2 et à la différence du dispositif de la figure 1A où ce même plan de joint était perpendiculaire à la direction d'éjection F au niveau de la partie en saillie e.

L'orientation angulaire du plan 23 est ici prévue sur une portion 23a seulement de sa longueur.
La portion 23b est ici perpendiculaire à l'axe de symétrie S de la cavité annulaire 10 mais elle pourrait prendre une autre inclinaison en fonction de la géométrie du moule.
Le plan de joint 31 entre l'élément central 1 et l'élément frontal 3 présente la même configuration avec une portion 31a partant de l'arête a orientée angulairement selon la direction d'éjection F.
L'élément de moule frontal 3 présente une face plane perpendiculaire f à l'axe de symétrie S de la cavité 10 (voir figure 2A).
Les éléments de moule 1, 2 de la partie en saillie e ont une forme globalement tronconique.

L'élément de moule frontal 3 est sous forme cylindrique avec une couronne R en relief fermant la cavité 10 vers l'avant et destinée au moulage de la gorge intercalaire située entre les deux lèvres de l'article.

Sur la figure 2B, le plan de joint 23a est orienté selon un angle α d'environ 45° mais, de façon plus générale, il est prévu que cet angle soit compris, tant pour le plan 23a que le plan 31a, entre 10° et 80° par rapport à l'axe de symétrie S de la cavité annulaire 10, sans que les valeurs des deux angles soient nécessairement identiques.

L'élément de moule latéral 2 de la partie en saillie e présente une dépouille destinée au moulage de la saillie et se raccordant vers l'avant au plan de joint 23a par un chanfrein r s'étendant jusqu'à l'arête a, comme représenté sur la figure 2B.

Les figures 3A à 3F représentes les différentes phases du procédé de moulage de l'invention mises en oeuvre au moyen du dispositif décrit ci-dessus.

Sur la figure 3A, le moule est fermé et on effectue le remplissage de la cavité 10 du dispositif avec une matière plastique liquide (par exemple, pour des joints, une matière élastomère telle que du polyuréthane, du polybutadiène, .....) généralement à chaud et sous pression via des canaux d'injection p ménagés dans le relief R de l'élément de moule frontal 3.

Sur la figure 3B, on effectue le retrait du porte-moule M dans la direction F qui entraîne avec lui l'élément de moule frontal 3 en séparant la cavité des canaux d'injection p.
La gorge située entre les deux lèvres est ainsi démoulée.
Conjointement, les canaux d'injection sont libérés et le porte-moule est séparé de l'élément frontal 3.

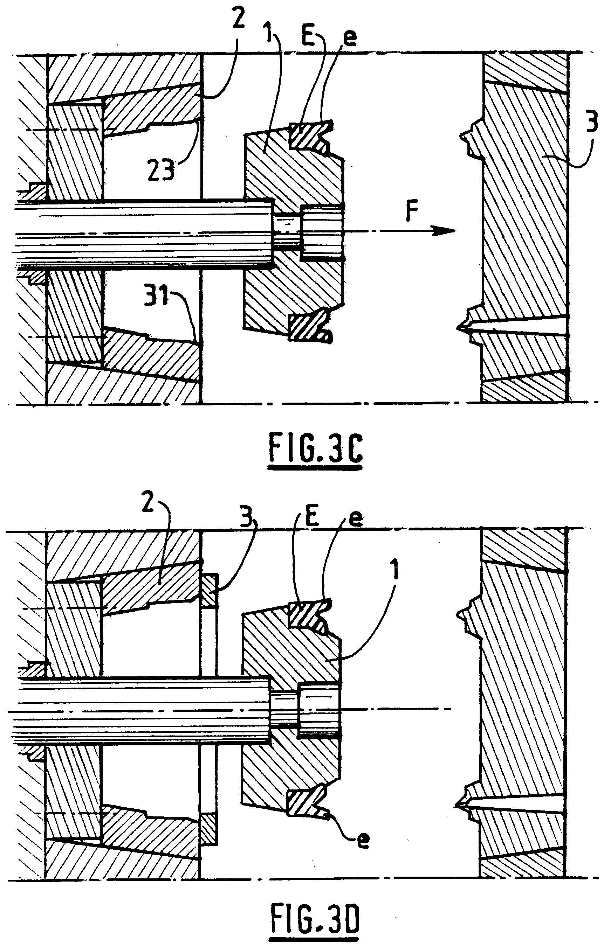

Sur la figure 3C, le piston portant l'élément central 1 du moule est poussé en avant selon la direction F relativement à l'élément latéral 2 ce qui conduit au démoulage de la partie extérieure en saillie e.
Durant cette phase, la saillie e bascule sous contrainte vers l'axe S en passant en force le plan de joint 23, 31.
Ce passage délicat est facilité en disposant un revêtement lubrifiant ou en réalisant au préalable un traitement de surface approprié sur la paroi interne de l'élément de moule latéral 2.

Sur la figure 3D, on dispose, autour du piston, un jeu J de plaquettes d'éjection dont la position est déterminée au préalable en fonction de la localisation de la partie arrière de l'article E.

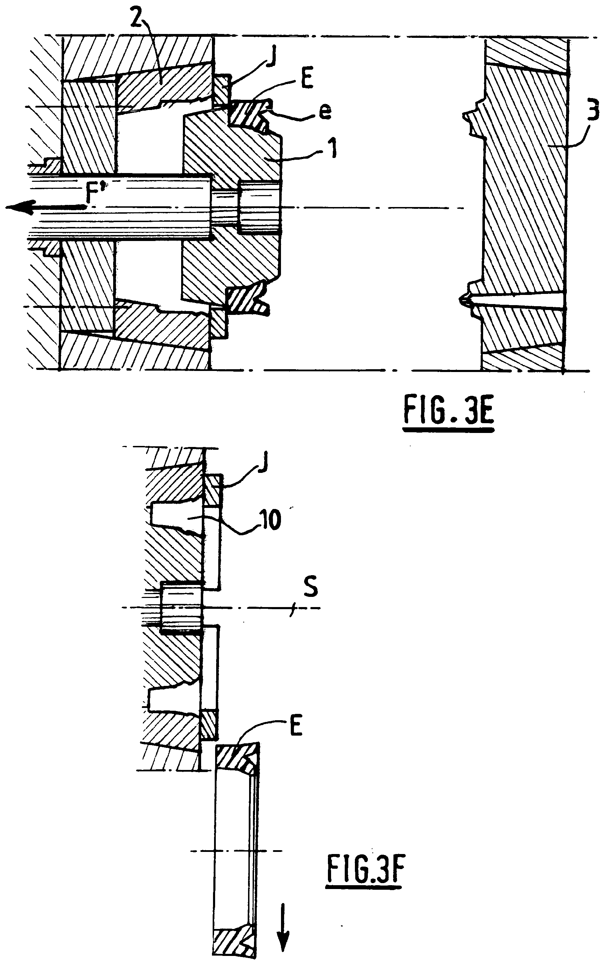

Puis, comme représenté sur la figure 3E, on effectue le recul du piston dans le sens de la flèche F' avec l'élément central 1 de façon à amener la partie arrière de l'article en appui contre le jeu J de plaquettes.

Cet appui combiné à un recul complet du piston jusqu'à sa position initiale a pour effet de pousser et de démouler complètement l'article E qui peut ainsi être récupéré par gravité sous le dispositif, comme représenté sur la figure 3F.

A la fin du cycle, on effectue le déplacement en retour des éléments de moule 1, 2 et 3 dans leur position initiale pour fermer à nouveau la cavité 10 et préparer le moulage d'un nouvel exemplaire de l'article.

Le dispositif de l'invention peut s'appliquer à un moule dit à plusieurs empreintes, c'est à dire comprenant plusieurs cavités 10 de façon à augmenter la capacité et les cadences de production.

## Revendications

1. Dispositif de moulage par injection d'un article (E) comportant, sur au moins une face dite fonctionnelle, une première partie périphérique en saillie (e) pourvue d'une arête de liaison (a) avec une autre face, ledit dispositif comprenant des éléments de moule (1, 2, 3), les éléments de moule étant déplaçables relativement les uns aux autres et coopérant de manière jointive en délimitant entre eux des plans de joint (12, 23, 31) ainsi qu'une cavité (10) destinée à être remplie de matière plastique liquide via des canaux d'injection (p) en vue de former ledit article après éjection du moule, tel qu'il comporte un élément de moule (2) pour former la première partie en saillie (e) de l'article ayant un plan de joint (23) avec un élément de moule frontal (3) immédiatement adjacent qui est orienté angulairement, à partir de ladite arête (a) et sur au moins une portion de sa longueur, par rapport à la direction d'éjection (F) tel que ledit élément de moule (2) de la partie en saillie présente une dépouille destinée au moulage de la saillie (e) et se raccordant vers l'avant au plan de joint (23) par un chanfrein (r) s'étendant jusqu'à ladite arête (a),
en ce que la cavité (10) est annulaire et ledit plan de joint (23) est orienté, sur au moins une portion de sa longueur, selon un angle (α) compris entre 10° et 80° par rapport à l'axe de symétrie (S) de la cavité (10) annulaire, l'axe de symétrie de la cavité étant parallèle à la direction d'éjection
et en ce qu'il comprend un élément de moule central (1) assurant le moulage d'une seconde partie en saillie (e) ayant une dite seconde arête et ayant un plan de joint (31) avec ledit élément de moule frontal (3) orienté angulairement d'un angle compris entre 10° et 80° par rapport à l'axe de symétrie (S) de la cavité annulaire (10), à partir de la seconde arête (a) et au moins sur une partie de sa longueur, par rapport à la direction d'éjection (F).

2. Dispositif selon la revendication 1, **caractérisé en ce que** ledit élément de moule frontal (3) présente une face plane (f) perpendiculaire à l'axe de symétrie (S) de la cavité (10).

3. Dispositif selon l'une des revendications 1 ou 2, **caractérisé en ce que** lesdits éléments de moule (1, 2, 3) et ladite cavité (10) présentent une symétrie de révolution autour de l'axe de ladite cavité.

4. Dispositif selon l'une des revendications précédentes **caractérisé en ce que** ledit élément de moule (2) de la partie en saillie (e) a une forme globalement tronconique.

5. Dispositif selon la revendication 1 **caractérisé en ce que** ledit élément de moule de la première partie en saillie est un élément latéral (2) dont le plan de joint (12) avec ledit élément de moule central (1) est incliné vers l'arrière et vers l'axe de symétrie (S) de ladite cavité.

6. Dispositif selon l'une des revendications 1 à 5, **caractérisé en ce que** lesdits canaux d'injection (p) sont ménagés au travers de l'élément de moule frontal (3).

7. Procédé de fabrication d'un article (E), du type comportant au moins une partie périphérique en saillie (e) pourvue d'une arête de liaison (a) avec sa face avant (f), au moyen du dispositif selon l'une des revendications précédentes.

8. Utilisation du dispositif selon l'une des revendications 1 à 7 pour fabriquer un article (E) tel qu'un joint annulaire d'étanchéité à simple ou double lèvre (e) en élastomère.

## Patentansprüche

1. Spritzgussvorrichtung eines Artikels (E), welche auf mindestens einer funktionell genannten Seite einen ersten vorspringenden umlaufenden Abschnitt (e) beinhaltet, der mit einer Verbindungskante (a) mit einer anderen Seite versehen ist, wobei die Vorrichtung Formelemente (1, 2, 3) umfasst, wobei die Formelemente im Verhältnis zueinander verschiebbar sind, und in aneinandergesetzter Weise zusammenwirken, indem sie zwischen sich Trennebenen (12, 23, 31), sowie einen Hohlraum (10) eingrenzen, der dazu bestimmt ist, über Einspritzkanäle (p) mit der Absicht mit flüssigem Kunststoffmaterial gefüllt zu werden, um nach dem Auswurf aus der Form den Artikel zu bilden, so dass sie ein Formelement (2) zum Bilden des ersten vorspringenden Abschnitts (e) des Artikels beinhaltet, welcher eine Trennebene (23) mit einem vorderen unmittelbar angrenzenden Formelement (3) aufweist, welches winkelig ausgehend von der Kante (a) ausgerichtet ist, und auf mindestens einem Teil seiner Länge, im Verhältnis zur Einspritzrichtung (F), so dass das Formelement (2) des vorspringenden Abschnitts eine Formschräge aufweist, welche zum Formen des Vorsprungs (e) bestimmt ist, und sich nach vorne durch eine Fase (r) an die Trennebene (23) anschließt, welche sich bis zur Kante (a) erstreckt,
dadurch, dass der Hohlraum (10) ringförmig ist und die Trennebene (23) auf mindestens einem Teil ihrer Länge in einem Winkel (*α*) zwischen 10° und 80° im Verhältnis zur Symmetrieachse (S) des ringförmigen Hohlraumes (10) ausgerichtet ist, wobei die Symmetrieachse des Hohlraumes parallel zur Auswurfrichtung verläuft,
und dadurch, dass sie ein zentrales Formelement (1) umfasst, welches für das Formen eines zweiten vorspringenden Abschnitts (e) sorgt, welcher eine zweite Kante aufweist und eine Trennebene (31) mit dem vorderen Formelement (3) aufweist, das winkelig in einem Winkel zwischen 10° und 80° im Verhältnis zur Symmetrieachse (S) des ringförmigen Hohlraumes (10) ausgehend von der zweiten Kante (a) ausgerichtet ist, und auf mindestens einem Teil ihrer Länge im Verhältnis zur Auswurfrichtung (F) .

2. Vorrichtung nach Anspruch 1, **dadurch gekennzeichnet, dass** das vordere Formelement (3) eine ebene Seite (f) senkrecht zur Symmetrieachse (S) des Hohlraumes (10) aufweist.

3. Vorrichtung nach einem der Ansprüche 1 oder 2, **dadurch gekennzeichnet, dass** die Formelemente (1, 2, 3) und der Hohlraum (10) eine Rotationssymmetrie um die Achse des Hohlraumes aufweisen.

4. Vorrichtung nach einem der vorstehenden Ansprüche, **dadurch gekennzeichnet, dass** das Formelement (2) des vorspringenden Abschnitts (e) eine im Allgemeinen kegelstumpfförmige Form aufweist.

5. Vorrichtung nach Anspruch 1, **dadurch gekennzeichnet, dass** das Formelement des ersten vorspringenden Abschnitts ein laterales Element (2) ist, dessen Trennebene (12) mit dem zentralen Formelement (1) nach rückwärts und zur Symmetrieachse (S) des Hohlraumes geneigt ist.

6. Vorrichtung nach einem der Ansprüche 1 bis 5, **dadurch gekennzeichnet, dass** die Einspritzkanäle (p) durch das vordere Formelement (3) hindurch angebracht sind.

7. Verfahren zum Herstellen eines Artikels (E), in der Art mindestens einen vorspringenden umlaufenden Abschnitt (e) beinhaltend, der mit einer Verbindungskante (a) mit seiner Vorderseite (f) versehen ist, anhand einer Vorrichtung nach einem der vorstehenden Ansprüche.

8. Verwendung einer Vorrichtung nach einem der Ansprüche 1 bis 7, zum Herstellen eines Artikels (E), wie einer ringförmigen Dichtung mit einfacher oder doppelter Dichtlippe (e) aus Elastomer.

## Claims

1. Device for the injection moulding of an item (E) comprising, on at least one so-called functional face, a first protruding peripheral part (e) provided with a connecting edge (a) for the connection with another face, said device including mould elements (1, 2, 3), the mould elements being capable of being moved relative to one other, and engaging with one another in a sealing manner by delimiting therebetween parting surfaces (12, 23, 31) as well as a cavity (10) intended to be filled with a liquid plastic material via injection channels (p) in order to form said item after ejection from the mould, such that it comprises a mould element (2) for forming the first protruding part (e) of the item having a parting surface (23) with an immediately adjacent front mould element (3) that is angularly oriented, from said edge (a) and over at least one portion of the length thereof, relative to the direction of ejection (F), such that said mould element (2) of the protruding part has a draft intended for the moulding of the protrusion (e) and connecting towards the front to the parting surface (23) by a chamfer (r) extending as far as said edge (a), in that the cavity (10) is annular and said parting surface (23) is oriented, over at least one portion of the length thereof, by an angle (α) that lies in the range 10° to 80° relative to the axis of symmetry (S) of the annular cavity (10), the axis of symmetry of the cavity being parallel to the direction of ejection and in that it comprises a central mould element (1) ensuring the moulding of a second protruding part (e) having a so-called second edge and having a parting surface (31) with said front mould element (3), angularly oriented by an angle that lies in the range 10° to 80° relative to the axis of symmetry (S) of the angular cavity (10), from the second edge (a) and at least over a portion of the length thereof, relative to the direction of ejection (F) .

2. Device according to claim 1, **characterised in that** said front mould element (3) has a planar face (f) perpendicular to the axis of symmetry (S) of the cavity (10) .

3. Device according to either claim 1 or claim 2, **characterised in that** said mould elements (1, 2, 3) and said cavity (10) are rotationally symmetrical about the axis of said cavity.

4. Device according to any of the previous claims, **characterised in that** said mould element (2) of the protruding part (e) has an overall frustoconical shape.

5. Device according to claim 1, **characterised in that** said mould element of the first protruding part is a side element (2), whose parting surface (12) with said central mould element (1) is inclined backwards and towards the axis of symmetry (S) of said cavity.

6. Device according to any of claims 1 to 5, **characterised in that** said injection channels (p) are provided through the front mould element (3).

7. Method for producing an item (E) of the type comprising at least one protruding peripheral part (e) provided with a connecting edge (a) for the connection with the front face (f) thereof, by means of the device according to any of the previous claims.

8. Use of the device according to any of claims 1 to 7 to produce an item (E) such as an elastomeric single- or double-lip annular seal (e).
